# EUROPEAN PATENT APPLICATION

(11) **EP 4 712 222 A1**
(43) Date of publication of application: **18.03.2026**
(21) Application number: 25199849.8
(22) Date of filing: 03.09.2025
(51) Int. Cl.: H01M 50/107, H01M 50/152, H01M 50/167, H01M 50/171, H01M 50/342

(54) **CYLINDRICAL BATTERY, PACK AND ELECTRONIC DEVICE**

(30) Priority: 14.09.2024 CN 202422269105 U
(71) Applicant: AESC Japan Ltd., Yokohama-Shi, Kanagawa 220-0012 (JP)
(72) Inventor: ZHANG, Fushi, Jiangyin City, Wuxi City, 214443 (CN)
(74) Representative: Becker, Eberhard

(57) **Abstract**

The disclosure provides a cylindrical battery (100), a pack (1002), and an electronic device (1000). The cylindrical battery (100) includes a housing (200) having an opening (205) at one end in a height direction (Hd) of the cylindrical battery (100); an electrode assembly (120) located in the housing (200) and having a winding center hole (120c); a cover plate (220) covering the opening of the housing (200) and having an explosion-proof valve region (222) formed by being surrounded by explosion-proof valves (350). The winding center hole (120c) is located within a range of an orthogonal projection of the explosion-proof valve region (222) of the cover plate (220) in the height direction (Hd). The winding center hole (120c) has a diameter D1, a partial region of the cover plate (220) has a diameter D2, and 35%≥D1/D2≥10%.

## Description

### BACKGROUND

### Technical Field

This disclosure relates to a cylindrical battery, pack and electronic device.

### Description of Related Art

In the field of new energy power batteries, secondary batteries refer to rechargeable batteries, also called renewable batteries or storage batteries. Unlike primary batteries, secondary batteries may undergo multiple charge-discharge cycles through reverse charging for repeated use. Secondary batteries generally include electrode assemblies, housings, cover plates, etc. Secondary batteries include cylindrical batteries and prismatic batteries. Cylindrical batteries refer to batteries including cylindrical wound cores, which include housings and electrode assemblies. The electrode assemblies include positive electrode sheets, negative electrode sheets, and separators located between the positive electrode sheets and the negative electrode sheets. These positive electrode sheets, negative electrode sheets and separators are stacked together and then wound into electrode assemblies, and then encapsulated within the housings.

### SUMMARY

For the problems existing in the related art, the purpose of the disclosure lies in providing a cylindrical battery, a pack and an electronic device, to at least improve safety of the cylindrical battery.

To achieve the above purpose, the disclosure provides a cylindrical battery, including a housing, the housing has an opening at one end in a height direction of the cylindrical battery; an electrode assembly, located in the housing and having a winding center hole; a cover plate, covering the opening of the housing and having an explosion-proof valve region formed by being surrounded by explosion-proof valves, the winding center hole is located within a range of an orthogonal projection of the explosion-proof valve region of the cover plate in the height direction. The winding center hole has a diameter D1, a partial region of the cover plate has a diameter D2, and 35%≥D1/D2≥10%.

In some embodiments, the housing has an outer diameter D3, and 50%≤D2/D3≤90%.

In some embodiments, the cylindrical battery has a height H, and D2>D1≥3%H.

In some embodiments, D3>D2≥20%H.

In some embodiments, D1 ranges from 4mm to 8mm.

In some embodiments, D2 ranges from 27mm to 31mm, and H ranges from 80mm to 160mm.

In some embodiments, the explosion-proof valve is a score on a surface of the cover plate facing the electrode assembly, and H ranges from 95mm to 120mm.

In some embodiments, a crimp portion protruding inward is disposed at a side wall of the housing adjacent to the opening, the side wall has a curled edge portion extending inward on a side of the crimp portion facing away from the electrode assembly, and the cover plate is clamped between the crimp portions and the curled edge portions in the height direction.

According to embodiments of the disclosure, a pack is also provided, which may include the cylindrical battery.

According to embodiments of the disclosure, an electronic device is also provided, which may include the pack.

The beneficial technical effects of the disclosure include:
Through the proportional design of the diameter D1 of the winding center hole and the diameter D2 corresponding to a weak portion of the cover plate, the disclosure may make the diameter D1 of the winding center hole sufficiently large while maintaining the diameter D2 corresponding to the weak portion within an appropriate range, taking into account both venting of the weak portion and exhaust of the center hole, thereby providing a sufficiently large vent channel to facilitate exhaust. When the battery undergoes thermal runaway, venting may be better performed and integrity of the battery body may be ensured, improving the safety of the cylindrical battery.

To make the aforementioned more comprehensible, several embodiments accompanied with drawings are described in detail as follows.

### BRIEF DESCRIPTION OF THE DRAWINGS

In order to more clearly illustrate the technical solutions in the embodiments of the disclosure or the prior art, the drawings required for use in the description of the embodiments or the prior art will be briefly introduced below. Obviously, the drawings in the following description are some embodiments of the disclosure. For those of ordinary skill in the art, other drawings may also be obtained according to these drawings without creative effort
FIG. 1 shows a schematic view when an electronic device of the embodiment of the disclosure is a vehicle.
FIG. 2 shows a perspective view of a cylindrical battery according to the embodiment of the disclosure.
FIG. 3 shows a cross-sectional view of a cylindrical battery according to the embodiment of the disclosure.

### DESCRIPTION OF THE EMBODIMENTS

For a better understanding of the spirit of the embodiments of the disclosure, the following provides further illustration in conjunction with some preferred embodiments of the disclosure.

The embodiments of the disclosure will be described in detail below. Throughout the specification of the disclosure, the same or similar components and components having the same or similar functions are represented by similar reference numerals. The embodiments described herein with respect to the drawings are illustrative, diagrammatic, and are provided for a basic understanding of the disclosure. The embodiments of the disclosure should not be construed as limiting the disclosure.

As used herein, the terms "substantially," "generally," "essentially," and "approximately" are used to describe and illustrate small variations, such as variations within the tolerance of manufacturing processes. When used in conjunction with an event or circumstance, the terms may refer to instances in which the event or circumstance occurs exactly as well as instances in which the event or circumstance occurs very closely.

In this specification, unless specifically designated or limited otherwise, relative terms such as "central," "longitudinal," "lateral," "front," "rear," "right," "left," "internal," "external," "lower," "higher," "horizontal," "vertical," "above," "below," "upper," "lower," "top," "bottom," and their derivative terms (such as "horizontally," "downwardly," "upwardly," etc.) should be interpreted as referring to the orientation described in the discussion or shown in the drawings. These relative terms are used merely for convenience of description and do not require that the disclosure be constructed or operated in a particular orientation.

For convenience of description, "first," "second," "third," etc. may be used herein to distinguish different components of one drawing or a series of drawings. "First," "second," "third," etc. are not intended to describe corresponding components.

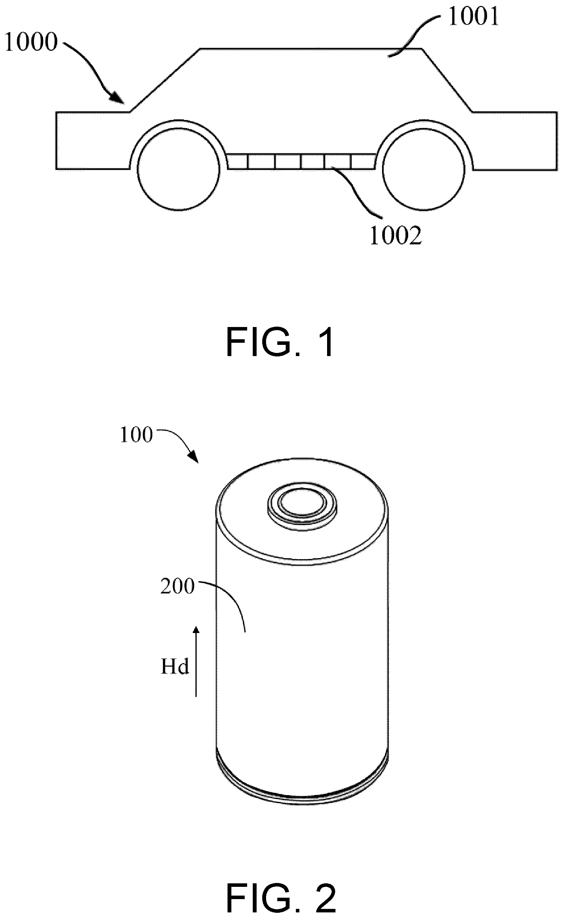

The disclosure provides an electronic device 1000. For convenience of illustration, the following embodiments are described by taking the electronic device 1000 as a vehicle as an example. Referring to FIG. 1, a pack 1002 is disposed inside the vehicle, and the pack 1002 may be disposed at the bottom or head or tail of the vehicle body 1001. The pack 1002 may be used for power supply of the vehicle. For example, the pack 1002 may serve as an operating power source of the vehicle. A working part of the electronic device 1000 is electrically connected to the pack 1002 to obtain electrical energy support. The vehicle may be a fuel vehicle, a gas vehicle, or a new energy vehicle. The new energy vehicle may be a pure electric vehicle, a hybrid vehicle, or a range-extended vehicle, etc., but is not limited thereto. The working part is the vehicle body, the pack 1002 is disposed at the bottom of the vehicle body, and provides electrical energy support for the driving of the vehicle or the operation of electrical components in the vehicle. However, in some other embodiments, the electronic device 1000 may also be a mobile phone, a portable device, a laptop computer, a ship, a spacecraft, an electric toy, an electric tool, etc. The spacecraft includes aircraft, rockets, space shuttles, spaceships, etc. The working part may be a unit component that obtains electrical energy from the pack 1002 and performs corresponding work, such as a blade rotation unit of a fan, a dust suction working unit of a vacuum cleaner, etc. The electric toys include fixed or mobile electric toys, for example, game machines, electric car toys, electric ship toys, electric airplane toys, etc. The electric tools include metal cutting electric tools, grinding electric tools, assembly electric tools, and railway electric tools, for example, electric drills, electric grinders, electric wrenches, electric screwdrivers, electric hammers, impact drills, concrete vibrators, electric planers, etc. The embodiments of the disclosure do not impose special restrictions on the above electronic device 1000.

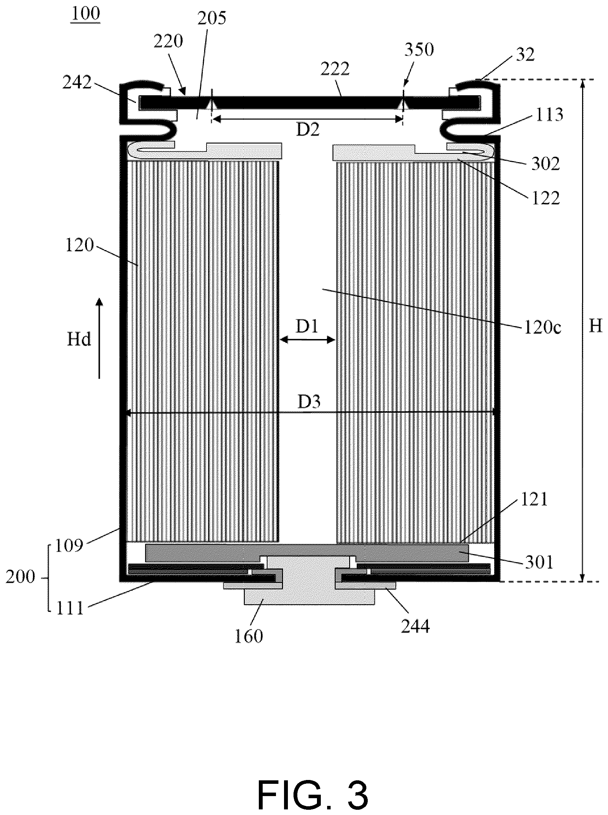

FIG. 2 shows a perspective view of a cylindrical battery 100 according to the embodiment of the disclosure, and FIG. 3 shows a cross-sectional view of the cylindrical battery 100 according to the embodiment of the disclosure.

In an example of the cylindrical battery of the disclosure, as shown in FIG. 2 to FIG. 3, the cylindrical battery 100 includes a housing 200. The housing 200 includes a side wall 109 and an end wall 111 connected to one end of the side wall 109. An opening 205 is disposed at another end of the side wall 109 opposite to the end wall 111. A cover plate 220 covers the opening 205 of the housing 200 for jointly encapsulating an electrode assembly 120 and electrolyte with the housing 200. The material of the housing 200 may be any one of various available materials, for example, copper, iron, aluminum, steel, aluminum alloy, etc. The housing 200 may be cylindrical and define an accommodating chamber, and the electrode assembly 120 is disposed in the accommodating chamber. The outer diameter of the housing 200 may be determined according to the specific diameter dimension of the electrode assembly 120, such as 18mm, 21mm, 46mm, etc. In some embodiments, the cylindrical battery 100 may be a 4680 cylindrical battery (outer diameter 46mm, height 80mm), or the cylindrical battery 100 may be a 4695 cylindrical battery (outer diameter 46mm, height 95mm), or the cylindrical battery 100 may be a 46120 cylindrical battery (outer diameter 46mm, height 120mm).

The electrode assembly 120 is mainly formed by sequentially stacking and winding a first electrode sheet, a second electrode sheet, and a separator located between the first electrode sheet and the second electrode sheet. In some embodiments of the disclosure, the first electrode sheet may be a positive electrode sheet, and the second electrode sheet may be a negative electrode sheet. The wound electrode assembly 120 has a winding center hole 120c. The electrode assembly 120 has a first tab 121 and a second tab 122 on opposite sides in its height direction Hd. The second tab 122 faces toward the opening 205, and the first tab 121 faces toward the end wall 111 opposite to the opening 205. The direction from the second tab 122 toward the first tab 121 is the height direction Hd of the electrode assembly 120. In some embodiments of the disclosure, the first tab 121 may be a positive tab, and the second tab 122 may be a negative tab. In some embodiments, the electrode assembly 120 may further include an insulating layer, such as insulating tape, adhered to the outer periphery of the first electrode sheet, the second electrode sheet, and the separator after winding.

In some embodiments, the positive electrode sheet (first electrode sheet) may include a positive electrode current collector and a positive electrode coating region, and the positive electrode coating region is coated on a partial surface of the positive electrode current collector. The positive electrode coating region is a positive electrode active material layer formed by coating positive electrode active material. The portion of the positive electrode current collector not covered by the positive electrode coating region constitutes the positive electrode tab (first tab 121). The negative electrode sheet (second electrode sheet) may include a negative electrode current collector and a negative electrode coating region, and the negative electrode coating region is coated on a partial surface of the negative electrode current collector. The negative electrode coating region is a negative electrode active material layer formed by coating negative electrode active material. The portion of the negative electrode current collector not covered by the negative electrode coating region constitutes the negative electrode tab (second tab 122).

Taking a lithium-ion battery as an example, the material of the positive electrode current collector may be aluminum, and the positive electrode coating region may include positive electrode active material, and the positive electrode active material may be lithium cobalt oxide, lithium iron phosphate, ternary lithium, or lithium manganese oxide, etc. The material of the negative electrode current collector may be copper. The negative electrode coating region may include negative electrode active material, and the negative electrode active material may be carbon or silicon, etc. The material of the separator may be PP (polypropylene) or PE (polyethylene), etc.

A crimp portion 113 (which may also be called a rolling groove) protruding inward may be disposed on the side wall of the housing 200 adjacent to the opening 205. The electrode assembly 120 is disposed between the end wall 111 and the crimp portion 113, and the crimp portion 113 is able to restrict movement of the electrode assembly 120 between the end wall 111 and the crimp portion 113 in the height direction Hd and its opposite direction. The end portion of the side wall 109 of the housing 200 on the opening 205 side may be configured as a curled edge portion 32, and the curled edge portion 32 extends inward in the radial direction of the housing 200. The curled edge portion 32 and the crimp portion 113 are spaced apart in the height direction Hd, and the crimp portion 113 and the curled edge portion 32 may jointly clamp the cover plate 220. An insulating member 242 may be disposed between the cover plate 220 and the housing 200 to electrically insulate the cover plate 220 from the housing 200.

The cylindrical battery 100 may further include a terminal post 160, and the terminal post 160 passes through the end wall 111 and is insulated from the end wall 111. The terminal post 160 may be electrically connected to the first tab 121 of the electrode assembly 120 through a first current collecting plate 301, so that the terminal post 160 is charged, for example, positively charged. The second tab 122 may be electrically connected to the housing 200 through a second current collecting plate 302, so that the housing 200 is charged, for example, negatively charged. An insulating member 244 is disposed between the terminal post 160 and the housing 200 to electrically insulate the terminal post 160 from the housing 200.

In an example of the cylindrical battery 100 of the disclosure, the manufacturing method of the cylindrical battery 100 in the disclosure includes the following steps.

Winding: a first electrode sheet, a separator, and a second electrode sheet are stacked and wound to form a winding structure, and the uncoated portions of the positive electrode current collector of the first electrode sheet and the negative electrode current collector of the second electrode sheet constitute the first tab 121 and the second tab 122. The first tab 121 and the second tab 122 are bent along in radial direction of the electrode assembly 120.

Welding of current collecting plates and electrode assembly: specifically, the first current collecting plate 301 and the second current collecting plate 302 are respectively welded and connected to the surface regions of the bent first tab 121 and the second tab 122.

Housing insertion: the electrode assembly 120 welded with the first current collecting plate 301 and the second current collecting plate 302 is installed into the housing 200 through the opening 205. The method of installing the electrode assembly 120 in this step is not limited, for example, it may be installed manually or through a mechanical arm.

Installing the terminal post 160.

Injecting electrolyte: the injection method of the electrolyte is not limited, and it may be selected to inject at the opening 205, or it may be selected to set an injection hole on the end wall 111 for injection; preferably, in this embodiment, the electrolyte is injected at the opening 205, which reduces the process of opening an injection hole on the end wall 111, and the existing opening 205 may be directly utilized for injection, which simplifies the process and reduces the cost.

Sealing: the cover plate 220 is sealed and installed on the opening 205, and there are various sealing methods, which are not limited. In some embodiments, the outer periphery of the housing 200 is first rolled to form a crimp portion 113 that is recessed toward the center of the housing 200 to restrict movement of the electrode assembly 120 in the height direction Hd, and then a mechanical sealing process is used to swaging the cover plate 220 to form the curled edge portion 32, thereby sealing and installing the cover plate 220 on the opening 205 of the housing 200. This process is mature, low-cost and highly efficient.

Based on the gradually achieved global consensus on carbon neutrality and further breakthroughs in lithium-ion battery technology, the trend of new energy vehicles replacing traditional fuel vehicles has become irreversible. Currently, prismatic batteries cannot ensure that the main body is not damaged during thermal runaway, which cannot guarantee sufficient time for drivers and passengers to evacuate when safety accidents occur. Cylindrical batteries, as the earliest battery form, have higher safety characteristics. The inventors of the disclosure have found that the safety of cylindrical batteries may be improved by designing some unique structural proportions of cylindrical batteries.

Continuing to refer to FIG. 3, the cover plate 220 has an explosion-proof valve 350, and a partial region of the cover plate 220 surrounded by the explosion-proof valve forms an explosion-proof valve region 222. In some embodiments, the explosion-proof valve 350 may have an annular shape in a plan view. In some embodiments, the explosion-proof valve 350 is a score on the surface of the cover plate 220 facing the electrode assembly 120. The material of the cover plate 220 may preferably be steel, or may also be other usable metal materials. The surface of the cover plate 220 has pre-plated nickel to prevent rust or corrosion. However, the pre-plated nickel at the score may be damaged, so the score is more susceptible to rust or corrosion. If the score is set on the side of the cover plate 220 facing away from the electrode assembly 120 (i.e., facing the outside of the secondary battery), the score will contact air, thereby corroding the cover plate 220. Therefore, setting the score on the surface of the cover plate 220 facing the electrode assembly 120 may prevent the cover plate from being corroded. The explosion-proof valve 350 is used for opening the valve to vent when the battery is in thermal runaway.

The winding center hole 120c is located within the orthogonal projection range of the explosion-proof valve region 222 of the cover plate 220 in the height direction Hd. Compared with other regions of the cover plate 220, the explosion-proof valve 350 has weaker strength and is more likely to break. When the battery undergoes thermal runaway, the high-temperature and high-pressure discharge materials from inside the battery may break through the explosion-proof valve 350 on the cover plate 220 and be discharged to the outside of the battery along with the explosion-proof valve region 222 of the cover plate 220, thereby achieving effective discharge of the discharge materials. When the battery undergoes thermal runaway causing the explosion-proof valve 350 to rupture for venting, a certain gas thrust is needed to push out the explosion-proof valve region 222 of the explosion-proof valve 350. The winding center hole 120c may be used as a vent channel when the battery vents, and since the winding center hole 120c is located within the orthogonal projection range of the explosion-proof valve region 222, gas may provide thrust to the explosion-proof valve region 222 through the winding center hole 120c.

The winding center hole 120c has a diameter D1. The explosion-proof valve region 222 of the cover plate 220 surrounded by the explosion-proof valve 350 has a diameter D2. D2 may be the diameter measured at the location where the cover plate 220 has the minimum thickness at the explosion-proof valve 350. In some embodiments, 35%≥D1/D2≥10%. This proportional design of D1/D2 may make the proportion of the diameter D1 of the winding center hole 120c sufficiently large, thereby providing a sufficiently large vent channel to facilitate exhaust. When the battery undergoes thermal runaway, venting may be better performed, and the integrity of the battery main body may be ensured, improving the safety of the cylindrical battery 100.

The housing 200 has an outer diameter D3. In some embodiments, 50%≤D2/D3≤90%. If D2/D3 is greater than 90%, it is difficult to achieve in the processing procedure, therefore, to ensure battery processing manufacturability, D2/D3≤90% should be satisfied. If D2/D3 is less than 50%, then D2 may be too small, making the area of the explosion-proof valve region 222 surrounded by the explosion-proof valve 350 too small, which is not conducive to venting when thermal runaway occurs. Through the proportional design of D2/D3, combined with the proportional design of D1/D2, the vent channel of the cylindrical battery is optimized, which may ensure both better venting and processing manufacturability.

The cylindrical battery 100 has a height H. The height H refers to the height in the height direction Hd from the end wall 111 of the housing 200 to the maximum distance on the opposite side of the housing 200 (in this embodiment, to the curled edge portion 32), that is, the height of the housing 200 (not including the height of the terminal post 160). In some embodiments, D2>D1≥3%H is satisfied. By setting the lower limit of the diameter D1 of the winding center hole 120c to 3%H and making D2 greater than D1, the winding center hole 120c with a sufficiently large diameter may be provided according to the battery height for use as a vent channel to vent when the battery undergoes thermal runaway.

In some embodiments, D3>D2≥20%H is satisfied. By setting the lower limit of the diameter D2 of the explosion-proof valve region 222 to 20%H and making D3 greater than D2, an area of the explosion-proof valve region 222 with a sufficiently large diameter may be provided according to the battery height, so that the explosion-proof valve region 222 may be more easily pushed out when the battery undergoes thermal runaway to better perform venting.

In some embodiments, the diameter D1 of the winding center hole 120c ranges from 4mm to 8mm. This value range of D1 may provide a sufficiently large winding center hole 120c for various types of cylindrical batteries for use as a vent channel to vent when the battery undergoes thermal runaway.

In some embodiments, the diameter D2 of the explosion-proof valve region 222 ranges from 27mm to 31mm. In embodiments where the cover plate 220 is clamped by the crimp portion 113 and the curled edge portion 32, according to the arrangement of the crimp portion 113 and the curled edge portion 32, this value range of D2 is the maximum achievable diameter range.

The technical solution of this disclosure may match various cylindrical batteries. In some embodiments, the cylindrical battery 100 is a 46-series cylindrical battery, that is, the outer diameter D3 of the housing 200 is 46mm, for example, the aforementioned 4680, 4695, 46120 cylindrical batteries. In some embodiments, the height H of the cylindrical battery 100 ranges from 80mm to 160mm. For example, the height H may be 120mm, 95mm, or 80mm. The technical solution of this disclosure may provide a sufficiently large vent channel for various cylindrical batteries, and when the battery undergoes thermal runaway, it may better perform venting, improving the safety of the cylindrical battery 100, for example, when the height H is 120mm. In the height direction of the cylindrical battery, the orthogonal projection of the explosion-proof valve region 222 is completely located within the minimum annular ring formed by the curled edge portion 32, so that when the cylindrical battery undergoes thermal runaway, the gas will not be blocked by the curled edge portion 32, and may vent more quickly.

In some embodiments, the range of the height H may be 95mm to 120mm. Under this height range, a more suitable range of 27mm to 31mm for the diameter D2 of the explosion-proof valve region 222 may be matched, and the diameter D1 may be correspondingly increased. As described above, this helps to perform venting and ensure the safety of the cylindrical battery 100.

Embodiments of this disclosure also provide a pack 1002 (see FIG. 1), including the cylindrical battery 100 of any one of the above, and the pack 1002 may have the beneficial effects described above regarding the cylindrical battery 100.

Embodiments of this disclosure also provide an electronic device 1000 (see FIG. 1), including the pack 1002, and the electronic device 1000 may have the beneficial effects described above regarding the cylindrical battery 100 and/or the pack 1002.

In some embodiments, the electronic device 1000 is a vehicle, as shown in FIG. 1. As described above with reference to FIG. 3, the cylindrical battery 100 provided by embodiments of this disclosure is able to ensure that the battery body is not damaged when the battery undergoes thermal runaway, thereby ensuring that sufficient time is left for drivers and passengers to evacuate when a safety accident occurs.

The above descriptions are merely preferred embodiments of this disclosure and are not intended to limit this disclosure. For those skilled in the art, this disclosure may have various modifications and variations. Any modifications, equivalent substitutions, improvements, etc., made within the spirit and principles of this disclosure shall be included within the protection scope of this disclosure.

## Claims

1. A cylindrical battery (100), comprising:
a housing (200), having an opening (205) at one end in a height direction (Hd) of the cylindrical battery (100);
an electrode assembly (120), located in the housing (200) and having a winding center hole (120c);
a cover plate (220), covering the opening (205) of the housing (200) and having an explosion-proof valve region (222) formed by being surrounded by explosion-proof valves (350), the winding center hole (120c) being located within a range of an orthogonal projection of the explosion-proof valve region (222) of the cover plate (220) in the height direction (Hd);
wherein the winding center hole (120c) has a diameter D1, the explosion-proof valve region (222) of the cover plate (220) has a diameter D2, and 35%≥D1/D2≥10%.

2. The cylindrical battery (100) according to claim 1, wherein
the housing (200) has an outer diameter D3, and 50%≤D2/D3≤90%.

3. The cylindrical battery (100) according to claim 1, wherein
the cylindrical battery (100) has a height H, and D2>D1≥3%H.

4. The cylindrical battery (100) according to claim 2, wherein
the cylindrical battery (100) has a height H, and D3>D2≥20%H.

5. The cylindrical battery (100) according to claim 1, wherein
D1 ranges from 4mm to 8mm.

6. The cylindrical battery (100) according to claim 3 or 4, wherein
D2 ranges from 27mm to 31mm, and
H ranges from 80mm to 160mm.

7. The cylindrical battery (100) according to claim 1, wherein
the explosion-proof valve (350) is a score on a surface of the cover plate (220) facing the electrode assembly (120); and
H ranges from 95mm to 120mm.

8. The cylindrical battery (100) according to claim 1, wherein
a crimp portion (113) protruding inward is disposed at a side wall (109) of the housing (200) adjacent to the opening (205), the side wall (109) has a curled edge portion (32) extending inward on a side of the crimp portion (113) facing away from the electrode assembly (120), the cover plate (220) is clamped between the crimp portion (113) and the curled edge portion (32) in the height direction (Hd), and
in the height direction (Hd) of the cylindrical battery (100), the orthogonal projection of the explosion-proof valve region (222) is completely located within a minimum annular ring formed by the curled edge portion (32).

9. A pack (1002), comprising the cylindrical battery (100) according to any one of claims 1 to 8.

10. An electronic device (1000), comprising the pack (1002) according to claim 9.
